(19) Europäisches Patentamt
European Patent Office
Office européen des brevets

(11) **EP 3 707 302 B1**

(12) **EUROPÄISCHE PATENTSCHRIFT**

(45) Veröffentlichungstag und Bekanntmachung des Hinweises auf die Patenterteilung:
**14.09.2022 Patentblatt 2022/37**

(21) Anmeldenummer: **18795362.5**

(22) Anmeldetag: **22.10.2018**

(51) Internationale Patentklassifikation (IPC):
*D06F 34/18* (2020.01)   *G01J 3/02* (2006.01)
*G01N 21/94* (2006.01)   *G01J 3/42* (2006.01)
*G01J 3/50* (2006.01)   *G01N 21/359* (2014.01)
*D06F 101/06* (2020.01)   *D06F 101/10* (2020.01)
*D06F 101/14* (2020.01)   *D06F 101/12* (2020.01)
*D06F 103/02* (2020.01)   *D06F 103/06* (2020.01)
*D06F 105/58* (2020.01)   *D06F 105/60* (2020.01)

(52) Gemeinsame Patentklassifikation (CPC):
**G01N 21/359; D06F 34/18; G01J 3/0264;
G01J 3/0272; G01J 3/42; G01J 3/50; G01N 21/94;**
D06F 33/36; D06F 34/05; D06F 2101/06;
D06F 2101/10; D06F 2101/12; D06F 2101/14;
D06F 2103/02; D06F 2103/06;         (Forts.)

(86) Internationale Anmeldenummer:
**PCT/EP2018/078841**

(87) Internationale Veröffentlichungsnummer:
**WO 2019/091765 (16.05.2019 Gazette 2019/20)**

(54) **HANDSCANNER ZUR VERBESSERTEN FLECKENERKENNUNG, SYSTEM MIT EINEM SOLCHEN HANDSCANNER UND VERFAHREN ZU SEINEM BETRIEB**

HANDHELD SCANNER FOR IMPROVED STAIN DETECTION, SYSTEM COMPRISING SUCH A HANDHELD SCANNER, AND METHOD FOR OPERATION THEREOF

SCANNER À MAIN POUR AMÉLIORER LA DÉTECTION DE TACHES, SYSTÈME COMPRENANT UN TEL SCANNER À MAIN ET PROCÉDÉ POUR LE FAIRE FONCTIONNER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2017 DE 102017219806**

(43) Veröffentlichungstag der Anmeldung:
**16.09.2020 Patentblatt 2020/38**

(73) Patentinhaber: **BSH Hausgeräte GmbH
81739 München (DE)**

(72) Erfinder:
• **NEUMAIER, Philipp
10247 Berlin (DE)**
• **POURZIAEI, Ramona
12055 Berlin (DE)**

(56) Entgegenhaltungen:
WO-A1-2004/053220   DE-A1- 19 809 015
DE-A1- 19 855 503   DE-A1-102013 210 996

(52) Gemeinsame Patentklassifikation (CPC): (Forts.)
D06F 2105/58; D06F 2105/60; G01N 2021/945

**Beschreibung**

Die Erfindung betrifft einen Handscanner zur verbesserten Fleckenerkennung, umfassend ein IR-Spektrometer, aufweisend eine Strahlungsquelle und einen Strahlungsdetektor, eine Steuerungseinheit und eine Schnittstelle zur drahtlosen Datenkommunikation. Die Erfindung betrifft weiterhin ein System mit einem solchen Handgerät und ein Verfahren zum Betrieb eines solchen Systems.

Wäschestücke sind abhängig von dem Material, aus welchem sie bestehen, mehr oder weniger mechanisch belastbar und dürfen nur bis zu einer bestimmten Temperatur erwärmt werden. Dies ist bei Waschprogrammen und bei Trocknungsprogrammen zu beachten. Einschränkungen gibt es überdies, weil viele Wäschestücke nicht mit bestimmten chemischen Mitteln behandelt werden dürfen. Es ist zudem bekannt, dass Wäschestücke abhängig vom Grad oder der Art ihrer Verschmutzung unterschiedlich behandelt werden sollten. Generell sollten Wäschestücke so schonend wie möglich behandelt werden, aber deren Verschmutzung möglichst vollständig entfernt werden. Wichtig ist zudem der zur Wäschebehandlung erforderliche Energiebedarf, der so klein wie möglich sein sollte. Schließlich ist die Zeitdauer wichtig, die zur Behandlung der Wäsche möglichst kurz sein sollte.

Die bekannten Wäschebehandlungsgeräte enthalten daher beispielsweise je nach ihrer Ausgestaltung eine Vielzahl von Waschprogrammen und anderen Wäschebehandlungsprogrammen, beispielsweise Trocknungsprogrammen, unter welchen ein Benutzer des Wäschebehandlungsgeräts das Programm wählen kann, welches nach seiner eigenen Beurteilung für die zu behandelnde Wäsche und die von der Wäsche zu entfernenden Verschmutzungen am geeignetsten ist. Hierfür benötigt der Benutzer allerdings möglichst viele Informationen und neben diesem Wissen auch viel Erfahrung, um entscheiden zu können, um was für ein Material es sich bei den zu behandelnden Wäschestücken handelt und um welche Art von Verschmutzung der Wäschestücke es sich handelt. Dies ist besonders schwierig, wenn das Wäschestück kein Etikett mehr aufweist. Es ist dann häufig nicht möglich, die Materialart des Wäschestückes zu identifizieren und das zulässige Behandlungsverfahren zu bestimmen.

Damit wird auch eine wirkungsvolle Entfernung von Verschmutzungen zumindest erschwert.

Es ist daher wünschenswert, die Behandlung von Wäschestücken in Haushalten zu verbessern, indem einerseits negative Auswirkungen der Behandlung auf die Wäschestücke und auf Zeitdauer und Energieverbrauch des durchgeführten Behandlungsprogrammes möglichst minimiert werden, andererseits aber auch Verschmutzungen effizient entfernt werden.

Haushaltsgeräte und Verfahren zur Verbesserung der Wäschebehandlung sind bereits bekannt, auch Haushaltsgeräte mit einer Fleckenerkennung.

Die Veröffentlichung DE 10 2011 076 991 A1 beschreibt ein Hausgerät mit flüssigkeitsführenden Bereichen, insbesondere Waschmaschine oder Waschtrockner, mit mindestens einer Strahlungsquelle, insbesondere mindestens einer UVC-Strahlungsquelle, wobei die mindestens eine Strahlungsquelle an einer geschützten Stelle innerhalb des Hausgerätes angebracht ist, und die emittierte Strahlung der Strahlungsquelle im Wesentlichen durch eine spiegelnde bzw. reflektierende Anordnung in den Zielbereich, insbesondere des Flüssigkeit, wie Lauge, und insbesondere in Verbindung mit dem zu behandelnden Behandlungsgut, wie Wäsche, aufweisenden Zielbereichs, gelenkt wird. Es wird zudem offenbart, dass eine UV-Strahlung mit einer größeren Wellenlänge, wie eine UVA-Strahlung, für die bessere Fleckenerkennung auf Kleidungsstücken eingesetzt werden kann.

Die Veröffentlichung WO 2001/046509 A1 beschreibt ein Gerät zur Behandlung von Textilien mit einer Einrichtung zur Erkennung von Eigenschaften einer Textilie, wobei die Einrichtung mindestens ein Sende- und mindestens ein Empfangselement zum Senden bzw. Empfangen elektromagnetischer Strahlung sowie eine mit dem Empfangselement verbundene Auswerteschaltung umfasst, und wobei die von dem Sendeelement gesendete und von der Textilie reflektierte und/oder transmittierte Strahlung vom Empfangselement empfangbar und in der Auswerteschaltung auswertbar ist.

Die Veröffentlichung DE 10 2015 100 395 A1 beschreibt ein Spektrometer, insbesondere für den Einbau in ein Sensormodul mit einer Strahlungsquelle und folgenden, einen Strahlengang definierenden bzw. entlang des Strahlengangs angeordneten Komponenten: einem Probenraum für ein zu untersuchendes Fluid, einer ersten Linse, einem Beugungselement, einer zweiten Linse, und einem Detektor. Zwischen dem Probenraum und dem Beugungselement ist eine Beschränkungsapertur zur Beschränkung des effektiven Durchmessers des auf das Beugungselement auftreffenden Strahlbündels vorgesehen.

Die Veröffentlichung EP 1242665 B1 beschreibt ein Gerät zur Behandlung von Textilien mit einer Auswerteschaltung zur Erkennung der Textilart und/oder der Feuchte eines Wäschestücks. Das Gerät verwendet Sende- und Empfangselemente zum Senden bzw. Empfangen elektromagnetischer Strahlung sowie eine mit dem Empfangselement verbundene Auswerteschaltung. Beschrieben ist auch ein Verfahren zur Erkennung von Eigenschaften eines Textilstückes, beispielsweise in einer Waschmaschine oder einem Wäschetrockner.

Die Veröffentlichung DE 10 2013 104 976 A1 beschreibt ein System, umfassend ein Haushaltsgerät, eine mobile Kommunikationseinrichtung und mindestens einen dem Haushaltsgerät räumlich zugeordneten RFID-Transponder. Mittels der Kommunikationseinrichtung ist eine Kennung eines in einem Erfassungsbereich der Kommunikationseinrichtung befindlichen RFID-Transponders auslesbar und mittels einer jeweils ausgelesenen Kennung ist eine in einem Speicher der Kommunikationseinrichtung projektierte Aktion abrufbar.

Zur besseren Gestaltung von Wäschebehandlungsprogrammen ist es überdies bekannt, Wäschestücke bereits vor deren Platzierung in ein Wäschebehandlungsgerät zu analysieren.

So beschreibt die Veröffentlichung DE 10 2013 210 996 A1 eine Analysevorrichtung zum Analysieren von Wäschestücken außerhalb eines Wäschebehandlungsgeräts, mindestens aufweisend mindestens eine Kamera und eine Auswerteeinrichtung zur Bestimmung mindestens einer wäschepflegerelevanten Eigenschaft mindestens eines Wäschestücks auf der Grundlage zumindest eines mittels der Kamera davon aufgenommenen Bilds. In einer Ausführungsform ist die mindestens eine wäschepflegerelevante Eigenschaft des Wäschestücks aus einer Gruppe von Eigenschaften mindestens umfassend eine maximale Behandlungstemperatur, eine Eignung zur maschinellen Trocknung, einen Trocknungsgrad, eine Eignung zur chemischen Reinigung, eine Farbe, eine Struktur, einen Textiltyp, einen Verschmutzungsgrad und eine Art des Wäschestückes auswählbar. Darüber hinaus ist diese Analysevorrichtung vorzugsweise dazu eingerichtet, auf der Grundlage mindestens einer erkannten wäschepflegerelevanten Eigenschaft eines oder mehrerer Wäschestücke einen Vorschlag für mindestens ein Wäschebehandlungsprogramm und/oder für mindestens ein Wäschepflegemittel anzuzeigen. Dabei kann die Analysevorrichtung dazu eingerichtet sein, eine bedienerseitige Auswahl des mindestens einen Wäschebehandlungsprogrammes zuzulassen und das Ergebnis der Auswahl auf das Wäschebehandlungsgerät zu übertragen.

Die Veröffentlichung DE 10 2015 201 948 A1 beschreibt ein Haushaltsgerät zur Behandlung von Gegenständen, aufweisend eine Steuereinrichtung und eine Bedienvorrichtung, umfassend eine Datenverarbeitungseinheit, eine Datenspeichereinheit, in welcher eine Programmbibliothek mit Behandlungsprogrammen für die Gegenstände hinterlegt ist, eine Datenkommunikationseinheit und ein Bedienmittel, wobei die Datenkommunikationseinheit eine Datenverbindung zwischen dem Bedienmittel, der Datenverarbeitungseinheit, der Datenspeichereinheit und der Steuereinrichtung des Haushaltsgeräts bereitstellt, wobei die Bedienvorrichtung ausgestaltet ist, um einem Benutzer eine Dateneingabe für eine Vielzahl von zu behandelnden Gegenständen zu ermöglichen, in der Datenverarbeitungseinheit eine Zuweisungsroutine hinterlegt ist, welche die Programmbibliothek mit der Dateneingabe vergleichen und mindestens eine optimierte Behandlungsmöglichkeit $B_{opt}$ für die gleichzeitige Behandlung einer Vielzahl der zu behandelnden Gegenstände ermitteln kann und das Bedienmittel dem Benutzer gestattet, eine optimierte Behandlungsmöglichkeit anzunehmen oder innerhalb vorgegebener Grenzen zu ändern, woraufhin die gegebenenfalls geänderte optimierte Behandlungsmöglichkeit $B_{opt}$ an die Steuereinrichtung des Haushaltsgeräts zur Durchführung des Behandlungsprogrammes übermittelt wird.

Die Veröffentlichung DE 10 2014 112 375 A1 beschreibt eine Vorrichtung zum Ansteuern eines Haushaltsgeräts, wobei die Vorrichtung die folgenden Merkmale aufweist: eine Schnittstelle zum Einlesen einer Bildinformation von einer Sensormatrix einer Anzeigeeinheit des Haushaltsgeräts, wobei die Sensormatrix Fotosensoren umfasst, die Bestandteil von Bildpunkten der Anzeigeeinheit sind; und eine Auswerteeinrichtung zum Bereitstellen eines Steuersignals zum Ansteuern des Haushaltsgeräts unter Verwendung der Bildinformation.

Die Veröffentlichung DE 10 2014 102 531 A1 beschreibt ein Verfahren zum Betrieb eines Haushaltsgeräts, wobei mittels eines eine Kamera umfassenden Mobiltelefons das Bild einer codierten Information aufgenommen wird und die codierte Information oder von der codierten Information umfasste Nutzdaten an das Haushaltsgerät übermittelt werden. Das Haushaltsgerät extrahiert aus der codierten Information die davon umfassten Nutzdaten und übernimmt diese oder die unmittelbar empfangenen Nutzdaten in einen internen Speicher, wobei das Haushaltsgerät die Nutzdaten als Automatikprogramm interpretiert und als Automatikprogramm abarbeitet.

Die Veröffentlichung WO 2015/055239 A1 beschreibt eine Waschmaschine mit Spracherkennung und Reaktionsfähigkeit sowie ein Verfahren zum Betrieb davon, wobei ein Benutzer für jedes Wäschestück Informationen zur Typologie (Bettwäsche, Hemden, Unterwäsche usw.) und eine Beschreibung seiner Charakteristik, insbesondere der Art des Materials, dem Verschmutzungsgrad und der Farbe und ihrer Intensität eingibt. Diese Daten werden gespeichert und ein Datenmanagement-System bestimmt aufgrund dieser Informationen das am besten geeignete Waschprogramm unter den möglichen Waschprogrammen.

Die Veröffentlichung WO 00/32865 A1 (EP 1135553 A1) beschreibt eine Wäschebehandlungsmaschine mit einer elektronischen Steuereinrichtung zur automatischen Durchführung von Wäschebehandlungsprogrammen, wobei ein Entscheidungsfindungsmittel vorgesehen ist zum maschinellen Identifizieren der Art von Wäschestücken und zur maschinellen Entscheidungsbildung darüber, mit welchem Wäschebehandlungsprogramm die identifizierten Wäschestücke behandelbar sind, und Informations-Ausgabemittel vorgesehen sind, durch welche das von dem Entscheidungsfindungsmittel maschinell ermittelte Wäschebehandlungsprogramm einer Person als Vorschlag präsentierbar ist, und von einer Person betätigbare Eingabemittel zum Bestätigen des maschinell ermittelten Wäschebehandlungsprogrammes vorgesehen sind. Zur Identifizierung der Wäschestücke können sie nacheinander manuell einem Meßkopf oder Sensor des Entscheidungsfindungsmittels vorgelegt werden, wobei der Meßkopf ein Handgerät sein kann und das Entscheidungsfindungsmittel vorzugsweise ein Spektrometer zur Identifizierung der Art der Wäschestücke enthält.

Die WO 2004/053220 A1 beschreibt ein Gerät zum Identifizieren von Textilparametern und ein Verfahren dazu. Das Gerät kann als ein handgehaltenes Messgerät ausgebildet sein, das eine Lampeneinheit und eine Nah-Infrarot Diodenanordnung aufweist. Die Nah-Infrarot Diodenanordnung ist dafür vorgesehen, eine Stelle eines Textils zu scannen und die gescannte Stelle mit Textilien zu vergleichen, die in einer Datenbank hinterlegt sind. Das Scannen umfasst dabei die folgenden Schritte: Beleuchten einer Oberfläche eines Textils, Sammeln der Proben, Identifizieren der Textilparameter, wobei ein Spektralbereich eine Wellenlänge von mindestens 400nm aufweist.

In der DE 10 2013 210996 A1 ist eine Analysevorrichtung offenbart, die zum Analysieren von Wäschestücken außerhalb eines Wäschebehandlungsgeräts dient. Die Analysevorrichtung weist eine Kamera und eine Auswerteeinrichtung auf. Die Analysevorrichtung ist als Smartphone ausgebildet. Die Kamera nimmt ein Bild von dem Wäschestück auf und vergleicht dieses Bild in einer App mit wäschepflegerelevanten Eigenschaften der Wäschestücke. Die App zeigt einem Nutzer an, welches Wäschepflegemittel für welche Wäschestücke W geeignet sind. Hierzu wird ein Bild eines Wäschestücks aufgenommen, das Bild wird von der Auswerteeinrichtung analysiert und eine wäschepflegerelevante Eigenschaft wird bestimmt.

Vor diesem Hintergrund war es Aufgabe der vorliegenden Erfindung, einen Handscanner (bisweilen auch einfach als "Handgerät" bezeichnet) und ein System mit einem solchen Handscanner bereitzustellen, welche dem Benutzer eine verbesserte Erkennung und Entfernung von Verschmutzungen von Wäschestücken gestatten, insbesondere auch in einem Haushaltsgerät. Vorzugsweise soll dem Benutzer eines Haushaltsgerätes gestattet werden, Wäschestücke schonender, energieeffizienter und in einer optimalen Zeitspanne zu reinigen, ohne dass ein Benutzer viele Informationen über die Art der Verschmutzungen und/oder der Wäschestücke hat. Vorzugsweise soll einem Benutzer ein in Hinblick auf die Art und Menge an Fasermaterial, Faseranteil und Farbe der Wäschestücke am besten geeignetes Behandlungsprogramm der Wäschestücke vorgeschlagen. Dieses soll vorzugsweise in einem Haushaltsgerät durchgeführt werden können. Darüber hinaus wäre es wünschenswert, wenn drahtlos vernetzte Geräte verwendet werden könnten, so dass eine besonders effiziente und bequeme Nutzung von vernetzten Geräten in einem Haushalt erfolgen kann. Außerdem soll ein Verfahren zum Betrieb des Systems bereitgestellt werden.

Die Lösung dieser Aufgabe wird nach dieser Erfindung erreicht durch einen Handscanner und ein System umfassend diesen Handscanner, sowie ein zum Betrieb des Systems geeignetes Verfahren mit den Merkmalen der entsprechenden unabhängigen Patentansprüche. Bevorzugte Ausführungsformen des erfindungsgemäßen Handscanners und des erfindungsgemäßen Systems sowie des erfindungsgemäßen Verfahrens sind in den jeweiligen abhängigen Patentansprüchen aufgeführt. Bevorzugten Ausführungsformen des erfindungsgemäßen Handscanners entsprechen bevorzugte Ausführungsformen des erfindungsgemäßen Systems und des erfindungsgemäßen Verfahrens und umgekehrt, auch wenn dies hierin nicht explizit festgestellt ist.

Gegenstand der Erfindung ist somit ein Handscanner, umfassend ein IR-Spektrometer, vorzugsweise ein NIR-Spektrometer, aufweisend eine Strahlungsquelle und einen Strahlungsdetektor, eine Steuerungseinheit, eine Schnittstelle zur drahtlosen Datenkommunikation und einen RGB-Sensor, wobei der Handscanner zur Erkennung von Verschmutzungen auf einem Wäschestück eingerichtet ist.

Hierbei ist der Ausdruck "Erkennung von Verschmutzungen auf einem Wäschestück" breit zu interpretieren. Insbesondere wird dadurch auch der Fall erfasst, dass der Handscanner Wäschestücke scannt, im Allgemeinen an einer Referenzstelle und einer Fleckenstelle, und gemessene IR-Spektren und/oder RGB-Werte zur weiteren Auswertung an ein externes Gerät, insbesondere einen externen Server, sendet. Das Ergebnis der Auswertung wird dann im Allgemeinen zurück an den Handscanner gesandt und einem Benutzer des Handscanners, im Allgemeinen mit Empfehlungen für das weitere Vorgehen zur Entfernung der Verschmutzungen, d.h. Flecken, geeignet dargestellt.

Erfindungsgemäß ist die Ausgestaltung des Handscanners nicht eingeschränkt. Der Handscanner kann jedwede Form und jedweden Aufbau aufweisen, wobei die Komponenten in beliebiger Art und Weise angeordnet sein können. Jedenfalls kann der Handscanner von einem Benutzer mit einer oder mit beiden Händen verwendet werden.

In einer bevorzugten Ausführungsform weist der Handscanner eine optische und/oder akustische Anzeigevorrichtung für ausgewertete Daten vom IR-Spektrometer und/oder RGB-Sensor auf.

Die Art des mindestens einen Strahlungsdetektors ist erfindungsgemäß nicht eingeschränkt. Es kann jeder Strahlungsdetektor zum Einsatz kommen, der die Detektion im IR- und insbesondere im NIR-Bereich ermöglicht. Im Allgemeinen wird ein Aufbau des mindestens einen IR-Spektrometers in Reflexion verwendet.

Ein NIR-Spektrometer arbeitet im Allgemeinen in einem Wellenlängenbereich von 800 bis 2500 nm.

Ein RGB-Sensor ist im Allgemeinen ein signalgebendes optisches Gerät zur selektiven Erfassung und Bewertung des sichtbaren Spektralbereiches, wobei im Allgemeinen breitbandige Lichtquellen (meist Hochleistungs-Weißlicht-LEDs) eingesetzt werden. Ein RGB-Sensor arbeitet in der Regel nach dem Dreibereichsverfahren, bei dem unter Einsatz von geeigneten Farbfiltern in drei Kanälen breitbandig und getrennt für die Farben rot, grün und blau eine Farbmaßzahl ermittelt wird.

Vorzugsweise enthält der Handscanner eine Eingabeeinheit für Eingaben eines Benutzers. Dies sind insbesondere Eingaben von zusätzlichen Informationen zu Verschmutzungen von Wäschestücken und vorzugsweise auch zu den Wäschestücken an sich, z.B. zu deren Form oder sonstigen Ausgestaltung; ob es sich beispielsweise um kurz- oder langärmlige Hemden, Blusen usw. handelt. Die Eingabe von zusätzlichen Informationen kann insbesondere auch eine Auswahl unter vorgegebenen Entscheidungsoptionen sein. Entscheidungsoptionen können sich dabei auf vorgeschlagene Fleckenentfernungsprogramme oder sonstige Vorschläge zur Entfernung von Verschmutzungen auf den Wäschestücken beziehen. Es sei an dieser Stelle angemerkt, dass hierin die Begriffe "Verschmutzungen" und "Flecken" synonym verwendet werden.

Sofern in Ausführungsformen der Erfindung auch eine Bestimmung von zu reinigenden Kleidungstypen vorgesehen ist, kann eine Entscheidungsoption sich auch z.B. auf die Auswahl unter wahrscheinlichen Kleidungstypenclustern (hierin auch als Cloth-Type-Cluster bzw. Auxiliary-Category-Cluster bezeichnet) beziehen.

In Ausführungsformen der Erfindung kann durch Eingaben eines Benutzers am Handscanner, der dann verallgemeinernd auch als "Handgerät" bezeichnet werden kann, ein von einem Wäschebehandlungsgerät durchzuführendes Behandlungsprogramm bzw. Fleckenentfernungsprogramm zur Abarbeitung ausgewählt werden. Es ist somit durch den Handscanner prinzipiell auch eine Steuerung eines Wäschebehandlungsgerätes möglich. Die Funktionsweise der Eingabeeinheit ist erfindungsgemäß nicht beschränkt. So können Eingaben durch Berührung, Sprache oder durch Eingabe eines Textes vorgenommen werden.

Die Bedieneinheit und die optische und/oder akustische Anzeigevorrichtung können im Handscanner auch als Einheit vorliegen, z.B. in Form eines Touchscreens.

In einer ganz besonders bevorzugten Ausführungsform des Handscanners ist die Steuerungseinheit für eine Kommunikation mit einem externen Server (auch als "Cloud" bezeichenbar) über die Schnittstelle zur drahtlosen Datenkommunikation eingerichtet, bei welcher Kommunikation erste und/oder zweite Daten des IR-Spektrometers und/oder des RGB-Sensors, vorzugsweise erste und zweite Daten des IR-Spektrometers und des RGB-Sensors, zu vom Handscanner an einer Referenzstelle und einer Fleckenstelle vermessenen Wäschestücken, zum externen Server übertragen werden, diese ersten und zweiten Daten im externen Server in Hinblick auf die Art und/oder die Menge an Verschmutzungen, sowie ggf. das Fasermaterial und den Faseranteil und/oder die visuelle Farbe, ausgewertet werden und diese Auswertungen dann als dritte Daten an den Handscanner und/oder ein Wäschebehandlungsgerät übermittelt werden.

Dabei ist es bevorzugt, dass die dritten Daten an den Handscanner übermittelt werden, wo sie auf einer optischen und/oder akustischen Anzeigevorrichtung, vorzugsweise in der Form von Auswahlmöglichkeiten, angezeigt werden und ein Benutzer basierend auf den dritten Daten zusätzliche Eingaben zu den Verschmutzungen und vorzugsweise auch zu den vermessenen Wäschestücken vornehmen kann. Im Allgemeinen wird aufgrund dieser Eingaben des Benutzers ein noch besser geeignetes Wäschebehandlungsprogramm bzw. Fleckenentfernungsprogramm vorgeschlagen oder ausgewählt, welches eine verbesserte Entfernung von Verschmutzungen ermöglicht. Dabei kann das Wäschebehandlungsprogramm bzw. Fleckenentfernungsprogramm als solches bereits in der Steuerungseinheit des Handscanners oder der Steuereinheit des Haushaltsgeräts hinterlegt sein. Es ist erfindungsgemäß allerdings auch möglich, dass ein Benutzer beispielsweise über weitere Eingaben am Handscanner ein im Wäschebehandlungsgerät durchzuführendes Programm modifiziert, beispielsweise eine Trommeldrehzahl, die Dauer und Richtung von Drehungen der Trommel, und eine Behandlungstemperatur.

Schließlich können einem Benutzer des Handscanners auch sonstige Vorschläge zur Entfernung von Verschmutzungen gemacht werden, wobei die vorgeschlagenen Maßnahmen nicht unbedingt in einem Wäschebehandlungsgerät durchgeführt werden müssen. So kann dem Benutzer eines Handscanners auch vorgeschlagen werden, die Wäschestücke einzuweichen, wobei Vorschläge zur Dauer und Temperatur beim Einweichen gemacht werden können, d.h. insbesondere am Handscanner angezeigt werden können. Ggf. könnte auch ein Waschvideo oder Bilder zu Behandlungsmaßnahmen angezeigt werden.

Schließlich könnte auch eine Empfehlung für ein Antiflecken-Waschmittel angezeigt werden, ggf. mit Angaben zu Bezugsmöglichkeiten bzw. Herstellern sowie Dosierungsempfehlungen. Dabei ist auch eine Anbindung an andere Geräte möglich, so dass Anzeigen beispielsweise auch auf einem Smartphone oder Tabletcomputer erfolgen können.

In Ausführungsformen der Erfindung werden im externen Server anhand der ersten und zweiten Daten neben Verschmutzungen der Wäschestücke vorteilhaft auch Fasermaterialien und Faseranteile bestimmt. Diese können einem Benutzer dann als Teil der dritten Daten dargestellt werden. Vorzugsweise werden bei dieser Ausführungsform die bestimmten Fasermaterialen und Faseranteile im externen Server Textilstück-Klassen als dritte Daten zugeordnet. Diese Textilstück-Klassen können unterschiedlich ausgestaltet sein, je nachdem ob die Textilart allein (z.B. synthetische Polymere, sog. Poly-Cluster; Seide, sog. "Silk-Cluster"; chemische Cellulose u.ä., sog. "Chem-Cellulose + Elastan-Cluster") oder zusätzlich auch die Faseranteile berücksichtigt werden. Vorzugsweise werden auch die Faseranteile berücksichtigt. Dabei hat es sich als vorteilhaft herausgestellt, die Faseranteile in verschiedene Bereichsgruppen einzuteilen (z.B. 90-99% für einen Hauptbestandteil) und die unterschiedlichen Faseranteile unterschiedlich zu gewichten. Im Ergebnis werden dann z.B. sog. Sensor-Signal-Codes (SSC) erhalten, die anschließend vorzugsweise die Grundlage für die Ausgabe und Anzeige der diesbezüglichen dritten Daten sind.

Gegenstand der Erfindung ist außerdem ein System zur Behandlung von Wäschestücken, umfassend einen Handscanner, einen externen Server und ein Wäschebehandlungsgerät, wobei der Handscanner ein IR-Spektrometer, vorzugsweise ein NIR-Spektrometer, aufweisend eine Strahlungsquelle und einen Strahlungsdetektor, eine Steuerungseinheit, eine Schnittstelle zur drahtlosen Datenkommunikation mit dem externen Server und einen RGB-Sensor aufweist und zur Erkennung von Verschmutzungen auf einem Wäschestück eingerichtet ist, wobei das IR-Spektrometer bei ausgeschalteter Strahlungsquelle ein Dunkelspektrum aufnehmen kann.

Vorzugsweise sind dabei Handscanner, externer Server und Wäschebehandlungsgerät eingerichtet zur Durchführung eines Verfahrens zum Betrieb des Systems, umfassend die Schritte

(a) Erstes Scannen von mindestens einem Wäschestück mit dem Handscanner an einer Referenzstelle, und Aufnahme eines IR-Spektrums und/oder von RGB-Sensor-Signalen;

(b) Übermitteln des im Schritt (a) erhaltenen IR-Spektrums und/oder der im Schritt (a) erhaltenen RGB-Sensor-Signale als erste Daten an den externen Server;

(c) Zweites Scannen des mindestens einen Wäschestücks aus Schritt (a) mit dem Handscanner an einer eine Verschmutzung aufweisenden Fleckenstelle des mindestens einen Wäschestücks;

(d) Übermitteln des im Schritt (c) erhaltenen IR-Spektrums und/oder der im Schritt (c) erhaltenen RGB-Sensor-Signale als zweite Daten an den externen Server;

(e) Auswerten der IR-Spektren und/oder der RGB-Sensor-Signale in Hinblick auf Art und/oder Menge von Verschmutzungen als dritte Daten; und

(f) Übermittlung der dritten Daten an den Handscanner und/oder das Wäschebehandlungsgerät.

Hierin ist "Fleckenstelle" gleichbedeutend mit "eine Verschmutzung aufweisende Fleckenstelle". Da ein verschmutztes Wäschestück mehrere unterschiedliche Flecken aufweisen kann, ist erfindungsgemäß vorgesehen, dass der Schritt (c) ein- oder mehrmals durchgeführt werden kann, um ggf. mehrere Flecken zu berücksichtigen. Vorzugsweise umfassen dann die zweiten Daten die Daten für mehrere Flecken.

Gegenstand der Erfindung ist somit außerdem ein Verfahren zum Betrieb eines Systems zur Behandlung von Wäschestücken, umfassend einen Handscanner, einen externen Server und ein Wäschebehandlungsgerät, wobei der Handscanner ein IR-Spektrometer, aufweisend eine Strahlungsquelle und einen Strahlungsdetektor, eine Steuerungseinheit, eine Schnittstelle zur drahtlosen Datenkommunikation mit dem externen Server und einen RGB-Sensor aufweist, umfassend die Schritte

(a) Erstes Scannen von mindestens einem Wäschestück mit dem Handscanner an einer Referenzstelle, und Aufnahme eines IR-Spektrums und/oder von RGB-Sensor-Signalen;

(b) Übermitteln des im Schritt (a) erhaltenen IR-Spektrums und/oder der im Schritt (a) erhaltenen RGB-Sensor-Signale als erste Daten an den externen Server;

(c) Zweites Scannen des mindestens einen Wäschestücks aus Schritt (a) mit dem Handscanner an einer eine Verschmutzung aufweisenden Fleckenstelle des mindestens einen Wäschestücks;

(d) Übermitteln des im Schritt (c) erhaltenen IR-Spektrums und/oder der im Schritt (c) erhaltenen RGB-Sensor-Signale als zweite Daten an den externen Server;

(e) Auswerten der IR-Spektren und/oder der RGB-Sensor-Signale in Hinblick auf Art und/oder Menge von Verschmutzungen als dritte Daten; und

(f) Übermittlung der dritten Daten an den Handscanner und/oder das Wäschebehandlungsgerät, wobei in einem Schritt (a-1), der vor dem Schritt (a) an einer Referenzstelle vorgenommen wird, bei ausgeschalteter Strahlungsquelle des IR-Spektrometers ein Dunkelspektrum aufgenommen wird.

Beim erfindungsgemäßen Verfahren werden somit mindestens drei Spektren aufgenommen, die dann im Allgemeinen an einen externen Server geschickt werden, welcher über eine geeignete Software aufweist, welche auch als "(chemometrisches) Cloud-Vorhersagemodell" bezeichnet werden kann.

Die Referenzstelle ist im Allgemeinen eine unverschmutzte Stelle auf dem Wäschestück, die als Referenz verwendet wird. Die Referenzstelle kann sich erfindungsgemäß aber auch auf einem sauberen Wäschestück befinden.

Die Fleckenstelle umfasst im Wesentlichen eine Mischung mehrerer Stoffe, welche die Verschmutzung bilden und sich auf den Fasern des Wäschestücks befinden.

Außerdem werden beim erfindungsgemäßen Verfahren wie oben beschrieben mittels des RGB-Sensors Farbinformationen aufgenommen und ebenfalls an das Cloud-Vorhersagemodell geschickt. Diese Farbinformationen sind im Allgemeinen drei Farbwerte (jeweils ein Rot-, Grün- und Blau-Wert) vom sauberen Teil eines Wäschestücks, insbesondere also der Referenzstelle. Zudem wird im Allgemeinen vom RGB-Sensor ein sogenannter Clear-Wert aufgenommen, der dem gesamten zurück gestrahlten Licht entspricht. Anschließend wird dabei im Allgemeinen eine Referenzierung auf den Clear-Wert vorgenommen.

Ebenso werden im Allgemeinen jeweils drei entsprechende Farbwerte (jeweils ein Rot-, Grün- und Blau-Wert) von dem oder den Flecken, die sich auf dem Wäschestück befinden, aufgenommen. Zudem wird im Allgemeinen ein sogenannter Clear-Wert aufgenommen, der dem gesamten zurück gestrahlten Licht entspricht. Anschließend wird dabei eine Referenzierung auf den Clear-Wert vorgenommen.

In einer bevorzugten Ausführungsform des erfindungsgemäßen Verfahrens werden jedenfalls im Schritt (a) an der Referenzstelle und im Schritt (c) an mindestens einer Fleckenstelle als RGB-Sensor-Signale drei Farbwerte, nämlich ein Rot-, ein Grün- und ein Blau-Wert, sowie ein Clear-Wert aufgenommen, der dem gesamten zurück gestrahlten Licht entspricht.

Um anhand der gemessenen RGB-Werte Informationen über die Zusammensetzung des Fleckens zu erhalten, werden die Farbunterschiede bestimmt, indem die RGB-Farbwerte beispielsweise voneinander abgezogen und gegeneinander referenziert werden. Es können beispielsweise die folgenden Referenzierungen V1 und V2 vorgenommen werden, worin RGBs die RGB-Werte der Fleckenstelle(n) sind (s=stain) und RGBc die RGB-Werte der Referenzstelle sind (c=clean):

$$V1 = RGBs - RGBc,$$

oder

$$V2 = RGBs / RGBc$$

Bevorzugt werden im Schritt (e) die an der Fleckenstelle und der Referenzstelle gemessenen RGB-Werte voneinander abgezogen.

Im Allgemeinen wird ein Benutzer über die Bedieneinheit, d.h. die Benutzeroberfläche, des Handscanners aufgefordert, zuerst die saubere (Referenzstelle) und anschließend die verschmutzte Stelle (Fleckenstelle) zu scannen. Erfindungsgemäß bevorzugt wird unmittelbar vor dem Scan der sauberen Stelle, welcher bei angeschalteter Beleuchtungsquelle durchgeführt wird, bei abgeschalteter Beleuchtungsquelle automatisch ein Dunkelspektrum aufgenommen, welches dann im Allgemeinen ebenfalls zum externen Server geschickt wird. Das Dunkelspektrum kann als vierte Daten angesehen werden, die bei der Auswertung der ersten und zweiten Daten vorzugsweise berücksichtigt werden.

Um ein Reflexionsspektrum R des Fleckens an sich, d.h. bereinigt um den Einfluss des Materials des Wäschestücks, zu erhalten, wird das aufgenommene Reflexionsspektrum I an der Fleckenstelle mit dem Reflexionsspektrum $I_c$ an der Referenzstelle, also im Allgemeinen einer sauberen Stelle, verglichen. Das beispielsweise auf diese Weise erhaltene Reflexionsspektrum des Fleckens an sich enthält die qualitativen und quantitativen Information zu Substanzen im Flecken, welche auf dem externen Server, d.h. in der Cloud, im Allgemeinen durch Anwendung von chemometrischen Algorithmen wie z.B. PLS-DA, SIMCA, PLS-Regression oder Ensemble-Methoden analysiert werden. In einer bevorzugten Ausführungsform des erfindungsgemäßen Verfahrens wird zum Erhalt eines Reflexionsspektrums R des Fleckens somit das im Schritt (c) an der Fleckenstelle aufgenommene Reflexionsspektrum I mit dem in Schritt (a) an der Referenzstelle gemessenen Reflexionsspektrum $I_c$ verglichen, wobei unter Berücksichtigung eines Dunkelspektrums D die folgende Formel zur Bestimmung des Reflexionsspektrums R herangezogen wird:

$$R = (I-D)/(I_c-D)$$

In einer bevorzugten Ausführungsform des erfindungsgemäßen Verfahrens werden im Schritt (d) die zweiten Daten an den Handscanner übermittelt und auf einer akustischen und/oder optischen Anzeigevorrichtung des Handscanners angezeigt. Ein Benutzer nimmt dann ggf. basierend auf den dritten Daten eine zusätzliche Eingabe zu den vermessenen verschmutzten Wäschestücken vor. Die Anzeigevorrichtung ist vorzugsweise als Touchscreen ausgestaltet.

Überdies ist es beim erfindungsgemäßen Verfahren bevorzugt, dass die ersten und zweiten Daten anhand der im externen Server festgestellten Verschmutzungen verschiedenen Verschmutzungen zugeordnet werden. Verschmutzungen, d.h. Flecken, enthalten im Allgemeinen Kohlenwasserstoffe, Fette, Proteine, anorganische und organische Säuren und/oder Zucker, wobei sich die Anteile dieser chemischen Komponenten im Allgemeinen unterscheiden.

Einzelne Verschmutzungen lassen sich dabei unterschiedlichen Fleckenklassen zuordnen, denen in einer Waschmaschine im Allgemeinen als Wäschebehandlungsprogramme jeweils sogenannte Anti-Flecken-Programme zugeordnet sind, um eine möglichst effiziente Entfernung der Verschmutzungen aus den Wäschestücken zu ermöglichen. Diese sind: Rotwein, Kaffee, Tee, Kosmetika (z.B. Lippenstift), Eier, Schokolade, Tomaten, Butter/Öl, Babynahrung, Blut, Flecken auf Socken, Schweiß, Erde/Sand, Erdbeeren und Orangen.

Diesen Fleckenklassen sind im Allgemeinen jeweils charakteristische chemische Substanzen zugeordnet. Durch eine Auswertung der RGB-Sensordaten sowie der IR-Spektren lassen sich diese chemischen Substanzen ermitteln, so dass eine mehr oder weniger genaue Zuordnung der Verschmutzungen an den Wäschestücken zu einer Fleckenklasse, z.B. zu einer der vorgenannten Klassen zu ermöglichen. Je mehr chemische Substanzen in Form ihrer IR-Spektren und RGB-Daten hinterlegt sind, beispielsweise auf dem vorgenannten externen Server, desto genauer kann die Bestimmung von Verschmutzungen erfolgen. Vorzugsweise werden die in den Flecken enthaltenen chemischen Substanzen hinsichtlich ihrer chemischen Natur quantifiziert und beispielsweise in ein Inhaltsstoffe-Histogramm überführt, dem dann im Allgemeinen ein Antiflecken-Programm zugeordnet ist.

Ein Anti-Flecken-Programm kann vorzugsweise mittels des Handscanners initiiert werden, der hierzu zur Ansteuerung vorzugsweise in ein Heimnetzwerk integriert sein kann.

Die Anti-Flecken-Programme weisen im Allgemeinen verschiedene Programmschritte auf, welche sich in Ihrer Art und Zeitdauer unterscheiden. In Abhängigkeit von der bestimmten Fleckenklasse oder vorzugsweise einem möglichst genauen Inhaltsstoffe-Histogramm werden dann solche Programmschritte zu- oder abgeschaltet und deren zeitliche Länge angepasst. Dabei kann der Eintrag von mechanischer Energie, auch als Mechanikeintrag bezeichnet, insbesondere durch Auswahl einer Trommeldrehzahl, eines Trommeldrehmusters, insbesondere auch eines Reversierens usw. dynamisch auf das Flecken-Inhaltsstoffe-Histogramm eingestellt werden. Ebenso kann die Temperatur einer Waschlauge in Abhängigkeit von der Fleckenklasse bzw. dem Inhaltsstoffe-Histogramm eingestellt werden.

Bei einem vorhandenen automatischen Dosiermittel für Waschmittel können Art und Menge des zugeführten Waschmittels entsprechend geregelt werden.

In einer bevorzugten Ausführungsform der Erfindung hat der Benutzer des Handgeräts die Möglichkeit, Eingaben am Handgerät zu den Verschmutzungen und/oder den Wäschestücken zu machen, um die Auswertung der Spektren und RGB-Daten zu unterstützen und so zu einer besseren Fleckenerkennung und damit -beseitigung beizutragen.

Vorzugsweise können für eine verbesserte Entfernung von Verschmutzungen an Wäschestücken Fasermaterialen und Faseranteile im externen Server Textilstück-Klassen zugeordnet werden. Hierbei ist es wiederum vorteilhaft, dass die anhand der ersten und zweiten Daten im externen Server festgestellten Fasermaterialen und Faseranteile im externen Server Clustern von Faseranteilen und/oder Fasermengen zugeordnet werden und aus den Textilstück-Klassen und den Clustern von Faseranteilen und/oder Fasermengen als weitere Daten sogenannte Sensor-Signal-Codes gebildet werden, in denen als Informationen Fasermaterialien und Faseranteile enthalten sind. Diese können einem Benutzer als Teil der dritten Daten angezeigt werden.

Erfindungsgemäß ist es überdies bevorzugt, dass den dritten Daten im Wäschebehandlungsgerät in Abhängigkeit von deren Eintrag von mechanischer Energie in Wäschestücke Wäschebehandlungsprogramme zugeordnet sind. Hierbei ist es wiederum vorteilhaft, dass Verschmutzungsarten und -mengen und vorzugsweise auch Kleidungsarten und/oder Kleidungsartengruppen, ggf. in Abhängigkeit von festgestellten visuellen Farben, als dritte Daten jeweils ein oder mehreren Wäschebehandlungsprogrammen zugeordnet sind.

Hat der Benutzer eine zusätzliche Eingabe zu den vermessenen Verschmutzungen und den Wäschestücken an sich vorgenommen, indem er beispielsweise eine Fleckenart und eine Kleidungsart oder Kleidungsartengruppe ausgewählt hat, können dieser Auswahl somit zwar mehrere Wäschebehandlungsprogramme, z.B. Wasch- oder Trocknungsprogramme zugeordnet sein. Aufgrund der festgestellten Farbe oder Farbkategorie und einem für die ausgewählten Wäschestücke zulässigen Eintrag von mechanischer Energie kann im System allerdings die Anzahl der möglichen Behandlungsprogramme, welche eine Beseitigung der Verschmutzungen ermöglichen, stark eingeschränkt werden, so dass einem Benutzer ein optimales Behandlungsprogramm vorgeschlagen oder aber automatisch durchgeführt wird.

Das Wäschebehandlungsgerät ist im Allgemeinen eine Waschmaschine oder ein Waschtrockner.

Die Erfindung hat zahlreiche Vorteile. Die Erfindung ermöglicht den Erhalt von Informationen über Verschmutzungen von Wäschestücken und deren Entfernung auf einfache und schnelle Weise. Dabei kann ein Benutzer des Handscanners Vorschläge für passende Anti-Flecken-Programme in einem Haushaltsgerät oder andere Fleckenentfernungsmethoden erhalten. Überdies ermöglicht die Erfindung eine Identifikations- und Kommunikationsmöglichkeit zwischen einem Benutzer, dem Wäschebehandlungsgerät und den zu reinigenden Wäschestücken, wobei der Benutzer bei seiner Entscheidungsfindung hinsichtlich der Wäschebehandlung bzw. Fleckenentfernung von erfindungsgemäßem Handscanner und System unterstützt wird.

Es ist allerdings prinzipiell auch möglich, dass ein Waschprogramm mit einer geeigneten Fleckenentfernung auch unmittelbar, d.h. ohne weitere Entscheidung durch einen Benutzer, gestartet wird. Generell können dabei unterschiedliche Arten und Mengen von Verschmutzungen, und in Ausführungsformen der Erfindung unterschiedliche Textilmaterialien, Kleidungstypen und Farben berücksichtigt werden. Durch die erfindungsgemäß mögliche optimierte Wäschebehandlung, insbesondere Entfernung von Verschmutzungen, können negative Auswirkungen eines Wäschebehandlungsprogramms wie Ausbluten von Farbe, Beschädigungen und Verschleiß an sich von Wäschestücken verhindert oder zumindest deutlich herabgesetzt werden.

Die Erfindung ermöglicht einem Benutzer eines Haushaltsgeräts eine einfache und übersichtliche Darstellung eines Benutzungsfalls (Use-Case) "Fleckenentfernung" und eine einfache und bequeme Anbindung und Steuerung eines Wäschebehandlungsgerätes. All dies kann erfindungsgemäß mit einer minimalen Benutzerinteraktion erfolgen.

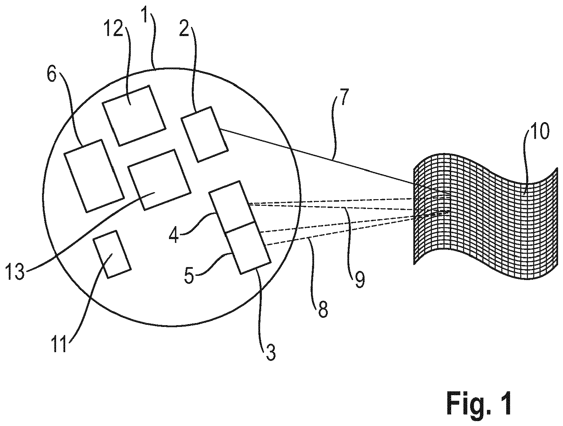

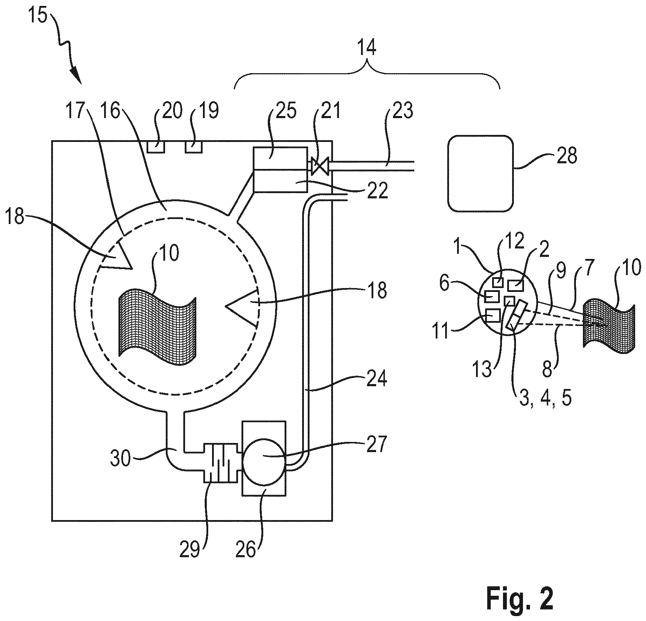

Weitere Einzelheiten der Erfindung ergeben sich aus der nachfolgenden Beschreibung nicht einschränkender Ausführungsformen. Hierbei wird Bezug genommen auf die Figuren 1 und 2.

Fig. 1    zeigt eine Ausführungsform eines erfindungsgemäßen Handscanners.

Fig. 2    zeigt eine Ausführungsform eines erfindungsgemäßen Systems, umfassend einen Handscanner, einen externen Server und ein Wäschebehandlungsgerät.

Figur 1 zeigt eine nicht einschränkende Ausführungsform eines erfindungsgemäßen Handscanners 1. Die Ausgestaltung des Handscanners 1 mit einem kugelförmigen Gehäuse ist exemplarisch zu sehen und dient lediglich der Veranschaulichung. Erfindungsgemäß ist die äußere Ausgestaltung des Handscanners nicht eingeschränkt. Der Handscanner 1 weist einen RGB-Sensor 2 auf, mittels dessen die visuelle Farbe bzw. Farbinformation 7 eines Wäschestücks 10 und insbesondere von dessen Verschmutzungen festgestellt werden kann. Hierbei wird an einer Referenzstelle, die im Allgemeinen keine Verschmutzungen aufweist, sowie an einer oder mehreren Fleckenstellen jeweils die visuelle Farbe mit den Werten r = rot, g = grün, b = blau und c = clear (Referenz) gemessen, welche durch die Steuerungseinheit 6 und eine Schnittstelle 11 zur drahtlosen Datenkommunikation an einen hier nicht gezeigten externen Server (Cloud) übermittelt wird. Der Handscanner 1 weist zudem ein IR-Spektrometer 3 auf, hier ein NIR-Spektrometer, welches eine Strahlungsquelle 4 und einen Strahlungsdetektor 5 umfasst. Mittels des IR-Spektrometers 3 kann die Art und die Menge an Verschmutzungen und vorzugsweise auch das Fasermaterial und der Faseranteil im Wäschestück 10 ermittelt werden, indem das Wäschestück 10 in einer ersten Messung an der Referenzstelle und in einer zweiten Messung an der Stelle der Verschmutzung mit Strahlung 8 aus der Strahlungsquelle 4 beaufschlagt wird und der Strahlungsdetektor 5 die reflektierten Strahlungen 9 jeweils als ein Messsignal detektiert. Die vom RGB-Sensor 2 und dem IR-Spektrometer 3 ermittelten Daten, sog. erste und zweite Daten, werden an den nicht gezeigten externen Server übermittelt, der zusammen mit dem Handscanner 1 und einem hier ebenfalls nicht gezeigten Wäschebehandlungsgerät ein System zur Behandlung von Wäschestücken bildet, in welchem ein Verfahren umfassend die Schritte

(a) erstes Scannen von mindestens einem Wäschestück mit dem Handscanner an einer Referenzstelle, und Aufnahme eines IR-Spektrums und/oder von RGB-Sensor-Signalen;
(b) Übermitteln des im Schritt (a) erhaltenen IR-Spektrums und/oder der im Schritt (a) erhaltenen RGB-Sensor-Signale als erste Daten an den externen Server;
(c) zweites Scannen des mindestens einen Wäschestücks 10 aus Schritt (a) mit dem Handscanner 1 an einer eine Verschmutzung aufweisenden Fleckenstelle des mindestens einen Wäschestücks 10;
(d) Übermitteln des im Schritt (c) erhaltenen IR-Spektrums und/oder der im Schritt (c) erhaltenen RGB-Sensor-Signale als zweite Daten an den externen Server;

(e) Auswerten der IR-Spektren und/oder der RGB-Sensor-Signale in Hinblick auf Art und/oder Menge von Verschmutzungen als dritte Daten; und
(f) Übermittlung der dritten Daten an den Handscanner 1 und/oder das Wäschebehandlungsgerät durchgeführt wird, wobei in einem Schritt (a-1), der vor dem Schritt (a) an einer Referenzstelle vorgenommen wird, bei ausgeschalteter Strahlungsquelle des IR-Spektrometers ein Dunkelspektrum aufgenommen wird.

Der Handscanner 1 weist eine Bedieneinheit 12 auf. Über die Bedieneinheit 12 kann beispielsweise über eine Eingabemaske durch einen Benutzer mindestens eine Information in Bezug auf das Wäschestück 10 und dessen Verschmutzung eingegeben werden. Hierzu werden dem Benutzer auf einer akustischen und optischen Anzeigevorrichtung 13 sogenannte dritte Daten dargestellt. Neben Angaben zu Verschmutzungen und den Wäschestücken an sich können als dritte Daten einem Benutzer auch Vorschläge für die weitere Behandlung und insbesondere Fleckenentfernung gemacht werden. Bei der hier gezeigten Ausführungsform handelt es sich hierbei um eine Anzeige von Verschmutzungsarten, aber vorzugsweise auch von Kleidungsarten und/oder Kleidungsartengruppen, welche bezüglich der Fasermaterialien und Faseranteile anhand der Auswertung im externen Server am wahrscheinlichsten sind. Diese Verschmutzungsarten sind vorzugsweise auf der Anzeigevorrichtung angeordnet. Dabei ist die Angabe von Fleckenklassen oder aber die Anzeige einer Auswertung der Flecken in Hinblick auf ihre chemische Zusammensetzung möglich, z.B. Kohlenwasserstoffe, Proteine, Fette, Säuren, Zucker usw.

Schließlich kann für eine optimale Fleckenentfernung auch die Kleidungsart berücksichtigt werden, wobei neben der automatischen Bestimmung auch eine Mithilfe durch den Benutzer möglich ist, der diesbezüglich weitere Informationen eingeben kann. Dabei sind vorzugsweise Kleidungsarten und/oder Kleidungsartengruppen auf der Anzeigevorrichtung 13 mit abnehmender Wahrscheinlichkeit ihres Auftretens angeordnet. Als Eingabe auf der Bedieneinheit 12 kann ein Benutzer bei einer solchen Ausführungsform der Erfindung eine dieser Kleidungsarten und/oder Kleidungsartengruppen auswählen, vorzugsweise durch Berühren einer als Touchscreen ausgestalteten Bedienvorrichtung, welche die Funktionen von Bedieneinheit 12 und Anzeigevorrichtung 13 vereint.

Die in den Schritten (b) und (d) an den externen Server übermittelten Daten, d.h. IR-Spektren und RGB-Sensor-Signale, werden dort nämlich ausgewertet und im Schritt (e) als dritte Daten an den Handscanner 1 übermittelt und auf der akustischen und optischen Anzeigevorrichtung 13 des Handscanners 1 angezeigt, wo ein Benutzer basierend auf den dritten Daten vorzugsweise zusätzliche Eingaben zu den Verschmutzungen, insbesondere deren Art und Mengen sowie ggf. zu den vermessenen Wäschestücken 10 als solche eine zusätzliche Eingabe vornimmt.

Figur 2 zeigt eine nicht einschränkende Ausführungsform eines erfindungsgemäßen Systems 14, umfassend einen Handscanner 1, einen externen Server 28 und als nicht einschränkendes Beispiel für ein Wäschebehandlungsgerät eine Waschmaschine 15.

Der Handscanner 1 weist eine Bedieneinheit 12 auf. Über die Bedieneinheit 12 kann beispielsweise über eine Eingabemaske mindestens eine Information durch einen Benutzer in Bezug auf das Wäschestück 10 und insbesondere in Bezug auf eine oder mehrere Verschmutzungen des Wäschestücks 10 eingegeben werden. Hierzu werden dem Benutzer auf einer akustischen und optischen Anzeigevorrichtung 13 sogenannte dritte Daten dargestellt. Diese Information dient der Ergänzung der bereits ausgewerteten ersten und zweiten Daten von IR-Spektrometer 3 und RGB-Sensor 2 über die Verschmutzungen und ggf. die Wäschestücke 10 an sich. Hierzu gehören beispielsweise neben Angaben zu Flecken Angaben zur Art des Wäschestücks wie Bluse, Unterwäsche, Bettwäsche, lang- oder kurzärmliges Hemd usw. Ansonsten haben die Bezugszeichen die gleiche Bedeutung wie für Fig. 1.

Bei der hier gezeigten Ausführungsform können der Handscanner 1, die Waschmaschine 15 und der externe Server 28 drahtlos miteinander kommunizieren, auch wenn nur für den Handscanner 1 die Schnittstelle zur drahtlosen Kommunikation gezeigt ist.

Die bei dieser Ausführungsform im System 14 verwendete Waschmaschine 15 weist einen Laugenbehälter 16 auf, in welchem eine Trommel 17 zur Aufnahme von Wäschestücken 10 um eine senkrecht zur Figurenebene stehende Achse drehbar gelagert ist. In der Trommel 17 sind Wäschemitnehmer 18 angeordnet. Die Waschmaschine 15 weist außerdem eine automatisierte Dosiereinheit 25 für Behandlungsmittel auf, welche an eine Einspülschale 22 angeschlossen ist. Über die Einspülschale 22 kann dem Laugenbehälter 16 von einer Frischwasserleitung 23 Wasser zugeführt werden. Hierzu befindet sich in der Frischwasserleitung 23 ein Sperrventil 21, das von einer Steuereinheit 20 entsprechend einem Behandlungsprogrammablauf angesteuert wird. Die Waschmaschine 15 weist in dieser Ausführungsform außerdem eine optische und akustische Anzeigeeinheit 19 auf, welche zur Darstellung von Informationen in Form von Text, Bild und/oder Animation in schwarz/weiß und/oder farbig ausgestaltet ist. Auf der optischen und akustischen Anzeigeeinheit 19 können im Prinzip auch die auf dem Handscanner 1 gezeigten Informationen dargestellt werden. Ebenso kann eine Eingabe durch einen Benutzer ggf. auch direkt an der Waschmaschine 15 erfolgen.

**Bezugszeichen**

| 1 | Handscanner |
| 2 | RGB-Sensor |
| 3 | IR-Spektrometer, insbesondere NIR-Spektrometer |
| 4 | Strahlungsquelle |
| 5 | Strahlungsdetektor |
| 6 | Steuerungseinheit (im Handscanner) |
| 7 | Farbinformation |
| 8 | Emittierte Strahlung |
| 9 | Reflektierte Strahlung |
| 10 | Wäschestück |
| 11 | Schnittstelle zur drahtlosen Datenkommunikation im Handscanner |
| 12 | Bedieneinheit (z.B. Touchscreen) |
| 13 | Optische und/oder akustische Anzeigevorrichtung im Handscanner |
| 14 | System zur Behandlung von Wäschestücken |
| 15 | Wäschebehandlungsgerät; Waschmaschine oder Waschtrockner |
| 16 | Laugenbehälter |
| 17 | Behandlungsraum (Trommel) |
| 18 | Wäschemitnehmer |
| 19 | Optische oder akustische Anzeigevorrichtung der Waschmaschine |
| 20 | Steuereinheit (in der Waschmaschine) |
| 21 | Sperrventil |
| 22 | Einspülschale |
| 23 | Frischwasserleitung |
| 24 | Abflussleitung |
| 25 | (automatische) Dosiereinheit |
| 26 | Antriebsmotor |
| 27 | Pumpe |
| 28 | Externer Server (insbesondere in einer Cloud) |
| 29 | Flusenabscheider |
| 30 | Laugenbehälterablaufleitung |

**Patentansprüche**

1. Handscanner (1), umfassend ein IR-Spektrometer (3), aufweisend eine Strahlungsquelle (4) und einen Strahlungsdetektor (5), eine Steuerungseinheit (6), eine Schnittstelle (11) zur drahtlosen Datenkommunikation und einen RGB-Sensor (2), wobei

    der Handscanner (1) zur Erkennung von Verschmutzungen auf einem Wäschestück (10) eingerichtet ist, **dadurch gekennzeichnet, dass** das IR-Spektrometer (3) bei ausgeschalteter Strahlungsquelle (4) ein Dunkelspektrum D aufnehmen kann.

2. Handscanner (1) nach Anspruch 1, **dadurch gekennzeichnet, dass** der Handscanner (1) eine optische und/oder akustische Anzeigevorrichtung (13) für ausgewertete Daten von IR-Spektrometer (3) und/oder RGB-Sensor (2) aufweist.

**3.** Handscanner (1) nach Anspruch 1 oder 2, **dadurch gekennzeichnet, dass** er eine Eingabeeinheit (12) für Eingaben eines Benutzers enthält.

**4.** Handscanner (1) nach einem der Ansprüche 1 bis 3, **dadurch gekennzeichnet, dass** die Steuerungseinheit (6) zu einer Kommunikation mit einem externen Server (28) über die Schnittstelle (11) zur drahtlosen Datenkommunikation eingerichtet ist, bei welcher Kommunikation erste und/oder zweite Daten des IR-Spektrometers (3) und/oder des RGB-Sensors (2) zu vom Handscanner (1) an einer Referenzstelle und einer Fleckenstelle vermessenen Wäschestücken (10) zum externen Server (28) übertragen werden können,
diese ersten und zweiten Daten im externen Server (28) in Hinblick auf die Art und/oder Menge an Verschmutzungen, sowie ggf. das Fasermaterial und den Faseranteil und/oder die visuelle Farbe, ausgewertet werden können und diese Auswertungen dann als dritte Daten an den Handscanner (1) und/oder ein Wäschebehandlungsgerät (15) übermittelt werden können.

**5.** Handscanner (1) nach Anspruch 4, **dadurch gekennzeichnet, dass** die dritten Daten an den Handscanner (1) übermittelt werden können, wo sie auf einer optischen und/oder akustischen Anzeigevorrichtung (13) angezeigt werden können.

**6.** Handscanner (1) nach Anspruch 5, **dadurch gekennzeichnet, dass** ein Benutzer basierend auf den dritten Daten zusätzliche Eingaben zu den Verschmutzungen und ggf. den vermessenen Wäschestücken (10) vornehmen kann.

**7.** System (14) zur Behandlung von Wäschestücken (10), umfassend einen Handscanner (1), einen externen Server (28) und ein Wäschebehandlungsgerät (15), wobei der Handscanner (1) ein IR-Spektrometer (3), aufweisend eine Strahlungsquelle (4) und einen Strahlungsdetektor (5), eine Steuerungseinheit (6), eine Schnittstelle (11) zur drahtlosen Datenkommunikation mit dem externen Server (28) und einen RGB-Sensor (2) aufweist und der Handscanner (1) eingerichtet ist zur Erkennung von Verschmutzungen auf den Wäschestücken (10),
wobei das System (14) **dadurch gekennzeichnet ist, dass** das IR-Spektrometer (3) bei ausgeschalteter Strahlungsquelle (4) ein Dunkelspektrum D aufnehmen kann.

**8.** Verfahren zum Betrieb eines Systems (14) zur Behandlung von Wäschestücken (10), umfassend einen Handscanner (1), einen externen Server (28) und ein Wäschebehandlungsgerät (15), wobei der Handscanner (1) ein IR-Spektrometer (3), aufweisend eine Strahlungsquelle (4) und einen Strahlungsdetektor (5), eine Steuerungseinheit (6), eine Schnittstelle (11) zur drahtlosen Datenkommunikation mit dem externen Server (28) und einen RGB-Sensor (2) aufweist, umfassend die Schritte

(a) Erstes Scannen von mindestens einem Wäschestück (10) mit dem Handscanner (1) an einer Referenzstelle, und Aufnahme eines IR-Spektrums und/oder von RGB-Sensor-Signalen;
(b) Übermitteln des im Schritt (a) erhaltenen IR-Spektrums und/oder der im Schritt (a) erhaltenen RGB-Sensor-Signale als erste Daten an den externen Server (28);
(c) Zweites Scannen des mindestens einen Wäschestücks (10) aus Schritt (a) mit dem Handscanner (1) an einer eine Verschmutzung aufweisenden Fleckenstelle des mindestens einen Wäschestücks (10);
(d) Übermitteln des im Schritt (c) erhaltenen IR-Spektrums und/oder der im Schritt (c) erhaltenen RGB-Sensor-Signale als zweite Daten an den externen Server (28);
(e) Auswerten der IR-Spektren und/oder der RGB-Sensor-Signale in Hinblick auf Art und/oder Menge von Verschmutzungen als dritte Daten; und
(f) Übermittlung der dritten Daten an den Handscanner (1) und/oder das Wäschebehandlungsgerät (15)

wobei in einem Schritt (a-1), der vor dem Schritt (a) an einer Referenzstelle vorgenommen wird, bei ausgeschalteter Strahlungsquelle (4) des IR-Spektrometers (3) ein Dunkelspektrum D aufgenommen wird.

**9.** Verfahren nach Anspruch 8, **dadurch gekennzeichnet, dass** im Schritt (f) die dritten Daten an den Handscanner (1) übermittelt und auf einer akustischen und/oder optischen Anzeigevorrichtung (13) des Handscanners (1) angezeigt werden.

**10.** Verfahren nach Anspruch 8 oder 9, **dadurch gekennzeichnet, dass** im Schritt (a) an der Referenzstelle und im Schritt (c) an mindestens einer Fleckenstelle als RGB-Sensor-Signale drei Farbwerte, nämlich ein Rot-, ein Grün- und ein Blau-Wert, sowie ein Clear-Wert aufgenommen, der dem gesamten zurück gestrahlten Licht entspricht.

**11.** Verfahren nach einem der Ansprüche 8 bis 10, **dadurch gekennzeichnet, dass** im Schritt (e) die an der Fleckenstelle und der Referenzstelle gemessenen RGB-Werte voneinander abgezogen werden.

**12.** Verfahren nach einem der Ansprüche 8 bis 11, **dadurch gekennzeichnet, dass** zum Erhalt eines Reflexionsspektrums R des Fleckens das im Schritt (c) an der Fleckenstelle aufgenommene Reflexionsspektrum I mit dem in Schritt (a) an der Referenzstelle gemessenen Reflexionsspektrum $I_c$ verglichen wird, wobei unter Berücksichtigung eines Dunkelspektrums D die folgende Formel zur Bestimmung des Reflexionsspektrums R herangezogen wird:

$$R = (I-D)/(I_c-D)$$

13. Verfahren nach einem der Ansprüche 8 bis 12, **dadurch gekennzeichnet, dass** den dritten Daten im Wäschebehandlungsgerät (15) in Abhängigkeit von deren Eintrag von mechanischer Energie in Wäschestücke (10) Wäschebehandlungsprogramme zugeordnet sind.

14. Verfahren nach einem der Ansprüche 8 bis 13, **dadurch gekennzeichnet, dass** den dritten Daten im Wäschebehandlungsgerät (15) in Abhängigkeit von Art und/oder Menge an Verschmutzungen ein oder mehrere Wäschebehandlungsprogramme zugeordnet sind.

**Claims**

1. Handheld scanner (1) comprising an IR spectrometer (3), having a radiation source (4) and a radiation detector (5), a control unit (6), an interface (11) for wireless data communication and an RGB sensor (2), wherein the handheld scanner (1) is designed to detect soiling on a laundry item (10), **characterised in that** the IR spectrometer (3) can record a dark spectrum D when the radiation source (4) is switched off.

2. Handheld scanner (1) according to claim 1, **characterised in that** the handheld scanner (1) has an optical and/or acoustic display device (13) for evaluated data from the IR spectrometer (3) and/or RGB sensor (2).

3. Handheld scanner (1) according to claim 1 or 2, **characterised in that** it contains an input unit (12) for inputs by a user.

4. Handheld scanner (1) as claimed in one of claims 1 to 3, **characterised in that** the control unit (6) is designed for communication with an external server (28) via the interface (11) for wireless data communication, in which communication the first and/or second data of the IR spectrometer (3) and/or the RGB sensor (2) relative to laundry items (10) measured by the handheld scanner (1) at a reference point and a stain point can be transmitted to the external server (28), this first and second data can be evaluated in the external server (28) regarding the type and/or quantity of soiling, and optionally the fibre material and the fibre component and/or the visual colour, and these evaluations can then be transmitted as third data to the handheld scanner (1) and/or a laundry treatment appliance (15).

5. Handheld scanner (1) according to claim 4, **characterised in that** the third data can be transmitted to the handheld scanner (1) where it can be displayed on an optical and/or acoustic display device (13).

6. Handheld scanner (1) according to claim 5, **characterised in that** a user may make additional inputs based on the third data relative to the soiling and optionally the measured laundry items (10).

7. System (14) for treating laundry items (10) comprising a handheld scanner (1), an external server (28) and a laundry treatment appliance (15), wherein the handheld scanner (1) has an IR spectrometer (3) having a radiation source (4) and a radiation detector (5), a control unit (6), an interface (11) for wireless data communication with the external server (28) and an RGB sensor (2), and the handheld scanner (1) is designed to detect soiling on the laundry items (10), wherein the system is **characterised in that** the IR spectrometer (3) can record a dark spectrum D when the radiation source (4) is switched off.

8. Method for operating a system (14) for treating laundry items (10), comprising a handheld scanner (1), an external server (28) and a laundry treatment appliance (15), wherein the handheld scanner (1) has an IR spectrometer (3), having a radiation source (4) and a radiation detector (5), a control unit (6), an interface (11) for wireless data communication with the external server (28) and an RGB sensor (2), comprising the steps

    (a) first scanning of at least one laundry item (10) with the handheld scanner (1) at a reference point, and recording an IR spectrum and/or RGB sensor signals;
    (b) transmitting the IR spectrum obtained in step (a) and/or the RGB sensor signals obtained in step (a) as first data to the external server (28);
    (c) second scanning of the at least one laundry item (10) of step (a) with the handheld scanner (1) at a stain point of the at least one laundry item (10) having soiling;
    (d) transmitting the IR spectra obtained in step (c) and/or the RGB sensor signals obtained in step (c) as second data to the external server (28);
    (e) evaluating the IR spectrum and/or the RGB sensor signals regarding the type and/or quantity of soiling as third data; and

(f) transmitting the third data to the handheld scanner (1) and/or the laundry treatment appliance (15), wherein in a step (a-1), which is undertaken before the step (a) at a reference point, a dark spectrum D is recorded when the radiation source (4) of the IR spectrometer (3) is switched off.

9. Method according to claim 8, **characterised in that** in step (f) the third data is transmitted to the handheld scanner (1) and displayed on an acoustic and/or optical display device (13) of the handheld scanner (1).

10. Method according to claim 8 or 9, **characterised in that** in step (a) at the reference point and in step (c) at at least one stain point three colour values, namely a red, a green and a blue value, and a clear value which corresponds to the total light reflected, are recorded as RGB sensor signals.

11. Method according to one of claims 8 to 10, **characterised in that** in step (e) the RGB values measured at the stain point and at the reference point are subtracted from one another.

12. Method according to one of claims 8 to 11, **characterised in that** in order to obtain a reflection spectrum R of the stain, the reflection spectrum I recorded in step (c) at the stain point is compared with the reflection spectrum $I_c$ measured in step (a) at the reference point, wherein by considering a dark spectrum D the following formula is used for determining the reflection spectrum R:

$$R = (I-D)/(I_c-D)$$

13. Method according to one of claims 8 to 12, **characterised in that** laundry treatment programs are assigned to the third data in the laundry treatment appliance (15) according to the input thereof of mechanical energy into the laundry items (10).

14. Method according to one of claims 8 to 13, **characterised in that** one or more laundry treatment programs are assigned to the third data in the laundry treatment appliance (15) according to the type and/or quantity of soiling.

**Revendications**

1. Scanner portatif (1), comprenant un spectromètre IR (3) comportant une source de rayonnement (4) et un détecteur de rayonnement (5), une unité de commande (6), une interface (11) de communication de données sans fil et un capteur RVB (2), dans lequel le scanner portatif (1) est configuré pour identifier des salissures sur une pièce de linge (10), **caractérisé en ce que** le spectromètre IR (3) peut recueillir, lorsque la source de rayonnement (4) est éteinte, un spectre sombre D.

2. Scanner portatif (1) selon la revendication 1, **caractérisé en ce que** le scanner portatif (1) comprend un dispositif indicateur optique et/ou sonore (13) pour des données évaluées par le spectromètre IR (3) et/ou le capteur RVB (2).

3. Scanner portatif (1) selon la revendication 1 ou 2, **caractérisé en ce qu'**il contient une unité d'entrée (12) pour des entrées par un utilisateur.

4. Scanner portatif (1) selon l'une des revendications 1 à 3, **caractérisé en ce que** l'unité de commande (6) est configurée pour une communication avec un serveur extérieur (28) via l'interface (11) de communication de données sans fil, au cours de laquelle communication des premières et/ou deuxièmes données du spectromètre IR (3) et/ou du capteur RVB (2) sur des pièces de linge (10) mesurées par le scanner portatif (1) à un endroit de référence et un endroit de tache peuvent être transmises au serveur extérieur (28),

ces premières et deuxièmes données peuvent être évaluées dans le serveur extérieur (28) en ce qui concerne le type et/ou la quantité de salissures, ainsi qu'éventuellement en ce qui concerne le matériau fibreux et la fraction fibreuse et/ou la couleur visuelle, et ces évaluations peuvent être transmises ensuite à titre de troisièmes données au scanner portatif (1) et/ou à un appareil de traitement du linge (15).

5. Scanner portatif (1) selon la revendication 4, **caractérisé en ce que** les troisièmes données peuvent être transmises au scanner portatif (1), où elles peuvent être indiquées sur un dispositif indicateur (13) optique et/ou sonore.

6. Scanner portatif (1) selon la revendication 5, **caractérisé en ce qu'**un utilisateur peut effectuer des entrées supplémentaires sur les salissures et éventuellement les pièces de linge mesurées (10) sur la base des troisièmes données.

7. Système (14) de traitement de pièces de linge (10), comprenant un scanner portatif (1), un serveur extérieur (28) et un appareil de traitement du linge (15), dans lequel le scanner portatif (1) comprend un spectromètre IR (3) comportant une source de rayonnement (4) et un détecteur de rayonnement (5), une unité de commande (6), une interface (11) de communication de données sans fil avec le serveur extérieur (28) et un capteur RVB (2), et le scanner portatif (1) est configuré pour identifier des salissures sur les pièces de linge (10),

dans lequel le système (14) est **caractérisé en ce que** le spectromètre IR (3) peut recueillir, lorsque la source de rayonnement (4) est éteinte, un spectre sombre D.

8. Procédé pour faire fonctionner un système (14) de traitement de pièces de linge (10), comprenant un scanner portatif (1), un serveur extérieur (28) et un appareil de traitement du linge (15), dans lequel le scanner portatif (1) comprend un spectromètre IR (3) comportant une source de rayonnement (4) et un détecteur de rayonnement (5), une unité de commande (6), une interface (11) de communication de données sans fil avec le serveur extérieur (28) et un capteur RVB (2), le procédé comprenant les étapes suivantes :

(a) premier scan d'au moins une pièce de linge (10) à l'aide du scanner portatif (1) à un endroit de référence, et recueil d'un spectre IR et/ou de signaux de capteur RVB,
(b) transmission du spectre IR obtenu à l'étape (a) et/ou des signaux de capteur RVB obtenus à l'étape (a) en tant que premières données au serveur extérieur (28),
(c) deuxième scan de l'au moins une pièce de linge (10) de l'étape (a) à l'aide du scanner portatif (1) à un endroit de tache présentant une salissure de l'au moins une pièce de linge (10),
(d) transmission du spectre IR obtenu à l'étape (c) et/ou des signaux de capteur RVB obtenus à l'étape (c) à titre de deuxièmes données au serveur extérieur (28),
(e) évaluation des spectres IR et/ou des signaux de capteur RVB en ce qui concerne le type et/ou la quantité de salissures à titre de troisièmes données, et
(f) transmission des troisièmes données au scanner portatif (1) et/ou à l'appareil de traitement du linge (15),

dans lequel, dans une étape (a-1) exécutée avant l'étape (a) sur un endroit de référence, un spectre sombre D est recueilli lorsque la source de rayonnement (4) du spectromètre IR (3) est éteinte.

9. Procédé selon la revendication 8, **caractérisé en ce que**, à l'étape (f) les troisièmes données sont transmises au scanner portatif (1) et sont indiquées sur un dispositif indicateur (13) sonore et/ou optique du scanner portatif (1).

10. Procédé selon la revendication 8 ou 9, **caractérisé en ce que**, à l'étape (a) sur l'endroit de référence et à l'étape (c) sur l'au moins un endroit de tache, en tant que signaux de capteur RVB, trois valeurs de couleur, à savoir une valeur de rouge, une valeur de vert et une valeur de bleu sont recueillies, ainsi qu'une valeur Clear, qui correspond à la lumière totale retransmise.

11. Procédé selon l'une des revendications 8 à 10, **caractérisé en ce que**, à l'étape (e), les valeurs RVB mesurées à l'endroit de tache et l'endroit de référence sont soustraites l'une de l'autre.

12. Procédé selon l'une des revendications 8 à 11, **caractérisé en ce que**, pour l'obtention d'un spectre de réflexion R de la tache, le spectre de réflexion I recueilli à l'endroit de tache à l'étape (c) est comparé au spectre de réflexion $I_c$ mesuré à l'endroit de référence à l'étape (a), dans lequel, en considérant un spectre sombre D, la formule suivante est appliquée pour déterminer le spectre de réflexion R :

$$R = (I-D) / (I_c-D).$$

13. Procédé selon l'une des revendications 8 à 12, **caractérisé en ce que** des programmes de traitement du linge sont associés aux troisièmes données dans l'appareil de traitement du linge (15) en fonction de leur apport d'énergie mécanique dans les pièces de linge (10).

14. Procédé selon l'une des revendications 8 à 13, **caractérisé en ce qu'**un ou plusieurs programmes de traitement du linge sont associés aux troisièmes données dans l'appareil de traitement du linge (15) en fonction du type et/ou de la quantité de salissures.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011076991 A1
- WO 2001046509 A1
- DE 102015100395 A1
- EP 1242665 B1
- DE 102013104976 A1
- DE 102013210996 A1
- DE 102015201948 A1
- DE 102014112375 A1
- DE 102014102531 A1
- WO 2015055239 A1
- WO 0032865 A1
- EP 1135553 A1
- WO 2004053220 A1